# EUROPÄISCHE PATENTANMELDUNG

(11) **EP 3 543 159 A1**
(43) Veröffentlichungstag der Anmeldung: **25.09.2019**
(21) Anmeldenummer: 18163575.6
(22) Anmeldetag: 23.03.2018
(51) Int. Cl.: B65D 25/10, B24B 13/00, B24B 9/14, B65D 85/38, G02B 7/02

(54) **TRANSPORTBEHÄLTER FÜR BRILLENGLÄSER ODER BRILLENGLASROHLINGE BEI DER BRILLENGLASHERSTELLUNG UND VERFAHREN ZUM HERSTELLEN EINS BRILLENGLASES AUS EINEM BRILLENGLASROHLING**

(71) Anmelder: Carl Zeiss Vision International GmbH, 73430 Aalen (DE)
(72) Erfinder: Dangelmaier, Andreas, 73434 Aalen (DE); Maier, Simon, 73430 Aalen (DE); Schön, Roland, 73433 Aalen (DE); Reng, Norbert, 89520 Heidenheim (DE); Behrendt, Michael, 73431 Aalen (DE); Vallerius, Ralf, 89520 Heidenheim (DE); Pfistner, Daniel, 73447 Oberkochen (DE); Kurz, Norbert, 73434 Aalen (DE)
(74) Vertreter: Carl Zeiss AG - Patentabteilung

(57) **Zusammenfassung**

Die Erfindung betrifft einen Transportbehälter (100) für Brillengläser oder Brillenglasrohlinge bei der Brillenglasherstellung mit einer Aufnahme (106, 107) zum Aufnehmen eines Brillenglases oder Brillenglasrohlings. Erfindungsgemäß ist wenigstens ein Bestandteil aus der nachfolgend angegebenen Gruppe in den Transportbehälter (100) integriert: Eine Messeinrichtung (310) zum Messen wenigstens einer Eigenschaft des in der Aufnahme (106, 107) aufgenommenen Brillenglases oder Brillenglasrohlings; eine Öffnung (108, 109) oder ein transparentes Fenster im Boden (101), im Deckel oder in gegenüberliegenden Seitenwänden zur Beaufschlagung des in der Aufnahme (106, 107) aufgenommenen Brillenglases oder Brillenglasrohlings mit Durchlicht; eine Lichtleitereinrichtung oder eine Lichtquelle oder ein Reflektor zur Beaufschlagung des in der Aufnahme (106, 107) aufgenommenen Brillenglases oder Brillenglasrohlings mit Licht; eine elektrische Energieversorgungseinrichtung; ein aktives drahtloses Informationsübertragungssystem oder eine Fixiereinrichtung zum selbsttätigen Fixieren des Brillenglases oder des Brillenglasrohlings in einer Fixierposition.

## Beschreibung

Die Erfindung betrifft einen Transportbehälter für Brillengläser oder Brillenglasrohlinge bei der Brillenglasherstellung nach dem Oberbegriff des Patentanspruchs 1 und ein Verfahren zum Herstellen von Brillengläsern nach dem Oberbegriff des Patentanspruchs 11.

Transportbehälter für Brillengläser oder Brillenglasrohlinge bei der Brillenglasherstellung sind nach dem Stand der Technik in einer Vielzahl an Varianten bekannt.

Die EP 0 839 603 A1 zeigt in den Figuren 3 und 8 und beschreibt in den zugehörigen Textstellen einen quaderförmigen in der Art einer Schuhschachtel ausgebildeten Transportbehälter, der dort als Tray oder Linsentransportschale bezeichnet ist. Die Linsentransportschale weist zwei Aufnahmen für Brillenlinsen in Form von Sicherungsschalen auf. Jede Linsentransportschale ist mit einem Strichcode gekennzeichnet, welcher die Spezifikationen der Linsen, die sie aufnimmt beschreibt. Alternativ können auch entsprechende Strichcodes auf den Schalen aufgebracht werden, um die Schalen voneinander unterscheidbar zu machen. Die die Linsen, die in der Linsentransportschale angeordnet sind, spezifizierenden Daten, werden dann in Bezug auf den Strichcode eingegeben, um eine korrekte Identifizierung der Linsentransportschale und die damit transportierten Linsen zu erreichen.

Auch die EP 1 473 114 A1 zeigt in den Figuren 1, 2, 6, 7 und 9 bis 12 Transportbehälter mit quaderförmiger, schuhschachtelartiger Form mit zwei Aufnahmen für Brillengläser oder Brillenglasrohlinge. Die Transportbehälter sind stapelbar ausgebildet. Die Transportbehälter sind mit einem ID-Tag für die von dem Transportbehälter aufgenommenen Brillengläser ausgestattet.

Precision Tool Technologies Inc. bietet unter der Bezeichnung Versi Tray einen schuhschachtelartig geformten Transportbehälter mit annähernd quadratischer Grundfläche an. Der Transportbehälter ist zweigeteilt. Die eine Seite des Transportbehälters weist zwei Aufnahmen für Brillengläser, nämlich das rechte und das linke Brillenglas, sowie zugehörige Blocker und Blockstücke auf, die andere Seite ist zur Aufnahme eines Läppwerkzeugs, von Befestigungsmitteln sowie Fassungs- und Bügelteilen vorgesehen. Darüber hinaus ist eine Mehrzahl an Schlitzen zur Aufnahme einer Laufkarte, also eines sogenannten Job Tickets, sowie Etiketten bzw. Label auf. Es gibt eine Ausführung dieses Versi Trays, bei dem die Aufnahmen für die Brillengläser ausgetauscht werden können. Diese werden von dem vorstehend angegebenen Unternehmen als Tray Inserts bezeichnet. Es gibt Behältnisse für Schrauben und die Fassungsbrücke. Die das Läppwerkzeug aufnehmende Seite des Transportbehälters kann in einer Ausführung des Transportbehälters mit einem transparenten Kunststoffdeckel versehen sein. Es gibt darüber hinaus diverse Aussparungen und Löcher, die an eine automatische Stapeleinrichtung und einen Roboter angepasst sind.

Die WO 2010/028741 A1 beschreibt einen quaderförmigen in der Art einer Schuhschachtel ausgebildeten als Basisbehälter bezeichneten Transportbehälter für Brillengläser oder Brillenglasrohlinge. Der Transportbehälter ist mit Wechseleinsätzen ausgestattet, die ein lageorientiertes Aufnehmen der Brillengläser oder Brillenglasrohlinge gewährleisten. Es gibt Einsätze, die z.B. Greiferöffnungen zum Ausheben von Brillengläsern aufweisen. Sie können eine Kulisse für einen 3- und/oder 4-Fingergreifer aufweisen. Sie können z.B. für Gläser mit geklebten Einweghalterungen geeignet ausgebildet sein. Die Einsätze können eine Bodenmarkierung zum Ausrichten der Brillenlinsen an deren Permanentsignaturen aufweisen. Die Einsätze können in einer hellen Farbe, insbesondere in weißer Farbe ausgebildet sein, so dass sich Verschmutzungen vergleichsweise leicht detektieren lassen. Die Einsätze sind so ausgestaltet, dass sie zur Fixierung von geblockten und ungeblockten Brillengläsern geeignet sind. Der Basisbehälter ist mit gleichartigen Basisbehältern stapelbar ausgebildet. Der Basisbehälter weist eine Aufnahme für einen Rezeptbeleg und eine Aufnahme für einen Transponder oder einen ID-Tag auf.

Insgesamt ist das Aufnahmevolumen des Basisbehälters so gewählt, dass gerade zwei Einsätze für Brillenglasrohlinge und der zugehörige Rezeptbeleg, jedoch keine weiteren Werkzeuge oder Zubehörteile wie Brillenfassung und Etui Platz finden.

Zu diesem Zweck gibt es Adapterbehälter, die mit einem Basisbehälter lösbar verbindbar sind. Ein derartiger Adapterbehälter ermöglicht die Aufnahme von den Brillengläsern oder -rohlingen des Paars zuordenbaren Komponenten.

Beispielsweise kann der erste Adapterbehälter eine Aufnahme zum Aufnehmen einer Brillenfassung aufweisen. Dies ist insbesondere dann erforderlich, wenn ein Transport zum und/oder während des sogenannten "Einschleifens der Brillenlinsen" erfolgen soll. Die Aufnahme des Adapterbehälters kann z.B. eine Rastnase aufweisen, um die Brillenfassung verliersicher in dem Adapterbehälter zu fixieren. Der Adapterbehälter kann neben der Aufnahme einer Brillenfassung auch zur Aufnahme von Schrauben und Nasenpads sowie eines (Brillen-) Etuis dienen und ausgebildet sein.

Der Abstand des im Allgemeinen etwas höheren Adapterbehälters wird durch Stützelemente am Basisbehälter überbrückt, damit die Stapelbarkeit gegeben ist. Das Transportbehältersystem kann auch einen (oder mehrere wiederum gleichartige) mit dem ersten Adapterbehälter und/oder dem Basisbehälter lösbar verbindbaren zweiten Adapterbehälter umfassen. Dies ist dann erforderlich, wenn neben den im Basisbehälter und im ersten Adapterbehälter befindlichen Gegenstände weitere dem Brillenglaspaar zugeordnete oder zuordenbare Gegenstände zusammen mit den Brillengläsern beim Transport mitgeführt werden müssen. D.h. z.B. dass beim Einschleifen der Basisbehälter entweder mit einem zusätzlichen Adapterbehälter oder mit einem zweiten Adapterbehälter am ersten Adapterbehälter bestückt werden kann, wenn Fassung und Etui ein zu großes Volumen einnehmen.

Dieser zweite Adapterbehälter kann z.B. eine spezielle Aufnahme zum Aufnehmen eines Brillenetuis aufweisen. Die Aufnahme zum Aufnehmen des Brillenetuis ist z.B. mit einer Rasteinrichtung versehen, um das Etui verliersicher zu halten. Ein Brillenetui kann beispielsweise mitgeführt werden, um die fertige Brillenlinse nach dem Einschleifen aufzunehmen. Die in dem Brillenetui befindliche Brille kann dann verpackt und an den Kunden geschickt werden.

Zusammenfassen existieren demnach nach dem Stand der Technik Transportbehälter mit folgenden Merkmalen:
- RFID (z.B. "Siemens MOBY" und andere Typen) am Gehäuse befestigt
- Orientierungserkennung über eingebettete Metallteile (für induktive Sensorik)
- Seitliches Fach für Rezeptbeleg (kodierter Laufzettel)
- Dediziertes Fach für Musterglas
- Öffnungen im Boden für Greifer/Stößel zum temporären Ausheben der Gläser
- Stapelfähigkeit (ggf. auch versetzt)
- Aussparungen für Sensorik
- Glasaufnahme für geblockte und ungeblockte Brillengläser, Halbfabrikate, (Polier-)Werkzeuge
- Mehrteiliger Aufbau (Inlays)

Obwohl sich Transportbehälter der in der Beschreibungseinleitung beschriebenen Art dem Grunde nach bewährt haben, besteht weiterer Verbesserungsbedarf.

Die Aufgabe der Erfindung besteht daher darin, einen Transportbehälter der gattungsgemäßen Art besser an den Fertigungsablauf eines Brillenglases anzupassen. Eine weitere Aufgabe der Erfindung besteht darin, einen verbesserten auf einer Modifikation des Transportbehälters basierenden Fertigungsprozess für ein Brillenglas bereitzustellen.

Die erstgenannte Aufgabe wird durch einen Transportbehälter mit den Merkmalen des Patentanspruchs 1 gelöst. Die letztgenannte Aufgabe wird durch ein Herstellverfahren mit den Merkmalen des Patentanspruchs 11 gelöst. Vorteilhafte Ausführungen und Weiterbildungen der Erfindung sind Gegenstand der Unteransprüche.

Die Erfindung basiert auf der Feststellung, dass bisherige Transportbehälter für optische Linsen, insbesondere für Brillengläser, wenig funktional sind. Die Intelligenz für die Handhabung der Brillengläser muss durch die Peripherie gestellt werden. Der Behälter erfüllt lediglich seinen ureigensten Zweck, nämlich den Transport von Linsen von einem Ort zum nächsten und bietet nur wenige Zusatzmerkmale, wie z.B. einen seitlichen Schlitz zur Befestigung von Laufzetteln o.ä.

Die Erfindung besteht daher in der Idee, die Messtechnik teilweise in den Transportbehälter selbst zu integrieren, so dass diese die Weiterbearbeitung über eine Mehrzahl an Bearbeitungs- und/oder Messstationen mitfahrend begleitet. Unter Messstation soll im Rahmen der vorliegenden Erfindung eine Einrichtung verstanden werden, an der eine Messung vorgenommen wird. In entsprechender Weise versteht man unter einer Bearbeitungsstation eine Einrichtung, an der ein Bearbeitungsschritt an dem Brillenglasrohling oder dem Brillenglas vorgenommen wird. Messstationen sind z.B. Bilderkennungs- und Bildverarbeitungssysteme, mit deren Hilfe verschiedene Merkmale auf den Brillengläsern, wie z.B. Gravuren, Stempelbilder, Strukturen oder Defekte sowie die Position und Größe bzw. Form der Brillengläser detektiert und ausgewertet werden können, Durchlichtmessgeräte, um die optische Wirkung bzw. Brechkraft zu messen, Weißlichtinterferometer, Deflektometriemessgeräte, Ultraschallmessgeräte oder kapazitive Sensorik zur Positionserkennung der Brillengläser, Mittendickenmessgeräte und dergleichen. Bearbeitungsstationen sind z.B. Zerspanungsmaschinen zur Formgebung, Druckeinrichtungen für additive Fertigungsverfahren, Laser, Stempel- und Druckmaschinen, Fügemaschinen (Blocker, Klebeplätze), Beschichtungsanlagen für funktionale Schichten, insbesondere Hartbeschichtung, Antireflexbeschichtung, wasser- und schmutzabweisende, antistatische, brechzahlanpassende sowie zur Vermeidung von Beschlag dienende Schichten.

Der Transportbehälter für Brillengläser oder Brillenglasrohlinge bei der Brillenglasherstellung nach der Erfindung umfasst wenigstens eine, vorzugsweise zwei Aufnahmen zum Aufnehmen eines rechten und eines linken Brillenglases oder eines rechten und eines linken Brillenglasrohlings. Ein Transportbehälter im Sinne der Erfindung muss nicht nur geeignet sein, ein oder zwei Brillengläser oder Brillenglasrohlinge aufzunehmen, sondern dessen Größe muss so gewählt sein, dass er mit dem oder den aufgenommenen Brillengläsern von Bearbeitungsstation zu Bearbeitungsstation mit Hilfe einer Fördereinrichtung transportiert werden kann. Die maximalen Abmessungen eines derartigen Transportbehälters dürfen daher ein Kantenmaß eines Würfels von 40 cm nicht überschreiten.

Der Transportbehälter ist erfindungsgemäß gekennzeichnet durch wenigstens einen Bestandteil aus der nachfolgend angegebenen Gruppe:
(i) eine Messeinrichtung zum Messen wenigstens einer Eigenschaft des in der Aufnahme aufgenommenen Brillenglases oder Brillenglasrohlings
(ii) einen Boden mit einem transparenten Fenster mit einer transparenten Fläche von wenigstens 5 cm² zur Beaufschlagung des in der Aufnahme aufgenommenen Brillenglases oder Brillenglasrohlings mit Durchlicht
(iii) einen Boden mit einem transparenten Fenster mit einer transparenten Fläche von wenigstens 5 cm² und einen gegenüberliegend angeordneten Deckel mit einem transparenten Fenster mit einer transparenten Fläche von wenigstens 5 cm² zur Beaufschlagung des in der Aufnahme aufgenommenen Brillenglases oder Brillenglasrohlings mit Durchlicht
(iv) einen Boden mit einem transparenten Fenster mit einer transparenten Fläche von wenigstens 5 cm² und einem gegenüberliegend angeordneten Deckel mit einer Öffnung mit einer Fläche von wenigstens 5 cm² zur Beaufschlagung des in der Aufnahme aufgenommenen Brillenglases oder Brillenglasrohlings mit Durchlicht
(v) einen Boden mit einer Öffnung mit einer Fläche von wenigstens 5 cm² zur Beaufschlagung des in der Aufnahme aufgenommenen Brillenglases oder Brillenglasrohlings mit Durchlicht
(vi) einen Boden mit einer Öffnung mit einer Fläche von wenigstens 5 cm² und einem gegenüberliegend angeordneten Deckel mit einer Öffnung mit einer Fläche von wenigstens 5 cm² zur Beaufschlagung des in der Aufnahme aufgenommenen Brillenglases oder Brillenglasrohlings mit Durchlicht
(vii) einen Boden mit einer Öffnung mit einer Fläche von wenigstens 5 cm² und einem gegenüberliegend angeordneten Deckel mit einem transparenten Fenster mit einer transparenten Fläche von wenigstens 5 cm² zur Beaufschlagung des in der Aufnahme aufgenommenen Brillenglases oder Brillenglasrohlings mit Durchlicht
(viii) eine erste Seitenwand mit einem transparenten Fenster mit einer transparenten Fläche von wenigstens 5 cm² und eine gegenüberliegend angeordnete Seitenwand mit einem transparenten Fenster mit einer transparenten Fläche von wenigstens 5 cm² zur Beaufschlagung des in der Aufnahme aufgenommenen Brillenglases oder Brillenglasrohlings mit Durchlicht
(ix) eine erste Seitenwand mit einem transparenten Fenster mit einer transparenten Fläche von wenigstens 5 cm² und eine gegenüberliegend angeordnete Seitenwand mit einer Öffnung mit einer Fläche von wenigstens 5 cm² zur Beaufschlagung des in der Aufnahme aufgenommenen Brillenglases oder Brillenglasrohlings mit Durchlicht
(x) eine erste Seitenwand mit einer Öffnung mit einer Fläche von wenigstens 5 cm² und eine gegenüberliegend angeordnete Seitenwand mit einer Öffnung mit einer Fläche von wenigstens 5 cm² zur Beaufschlagung des in der Aufnahme aufgenommenen Brillenglases oder Brillenglasrohlings mit Durchlicht
(xi) eine Lichtleitereinrichtung zur Beaufschlagung des in der Aufnahme aufgenommenen Brillenglases oder Brillenglasrohlings mit Licht
(xii) ein Leuchtmittel oder eine Lichtquelle zur Beaufschlagung des in der Aufnahme aufgenommenen Brillenglases oder Brillenglasrohlings mit Licht
(xiii) einer elektrischen Energieversorgungseinrichtung
(ixx) einen Reflektor zur Beaufschlagung des in der Aufnahme aufgenommenen Brillenglases oder Brillenglasrohlings mit das in der Aufnahme aufgenommene Brillenglas oder den in der Aufnahme aufgenommenen Brillenglasrohling transmittierendem Licht
(xx) ein aktives drahtloses Informationsübertragungssystem
(xxi) eine Fixiereinrichtung zum selbsttätigen Fixieren des Brillenglases oder des Brillenglasrohlings in einer Fixierposition.

Eine Messeinrichtung zum Messen wenigstens einer Eigenschaft des in der Aufnahme aufgenommenen Brillenglases oder Brillenglasrohlings entsprechend dem Merkmal (i) kann z.B. eine Vorrichtung zum automatischen Erkennen einer Permanentgravur sein, wie sie in der WO 2005/017482 A1 oder der EP 2 597 451 A2 oder einer Vorrichtung zum automatischen Detektieren und Auslesen eines Data Matrix Codes, wie sie in der EP 3 255 416 A1 beschrieben sind. Die Messeinrichtung kann auch eine Vorrichtung zur Vermessung der Oberfläche oder der Topographie der Oberfläche des Brillenglasrohlings oder des Brillenglases sein, z.B. der in der DE 41 42 564 A1 beschriebenen Art sein, welche die Analyse eines auf die Oberfläche projizierten Streifenmusters betrifft. Eine andere Messeinrichtung kann z.B. Gravuren, Codes, Dicke, Form, optische Wirkung, Glas- oder Schichtdefekte erkennen.

Regelmäßig bedürfen die bei der Herstellung von Brillengläsern zum Einsatz kommenden Messeinrichtungen der Beleuchtung des Brillenglases oder des Brillenglasrohlings im Durchlichtverfahren. Selbst wenn diese Messeinrichtungen bauraumbedingt nicht innerhalb des o.a. Würfelvolumens von 40 cm x 40 cm x 40 cm Platz finden, und daher als Bestandteil der Transporteinrichtung ausscheiden, ist es vorteilhaft, wenn die in der Transporteinrichtung befindlichen Brillengläser oder Brillenglasrohlinge zur Durchführung der Messung mit der Messeinrichtung nicht entnommen zu werden brauchen. Es ist daher nach der Erfindung vorgesehen, Boden und Deckel (soweit überhaupt vorhanden) oder gegenüberliegende Seitenwände des Transportbehälters mit entsprechenden transparenten Fenstern oder Öffnungen auszustatten, deren lichte (insbesondere kreisförmige) Fläche wenigstens 5 cm² beträgt. Die Fenster können aus Glas oder Kunststoff bestehen. Sie können fest angebracht oder auswechselbar ausgeführt sein. Die in den oben genannten Dokumenten WO 2005/017482 A1 oder EP 2 597 451 A2 beschriebenen automatischen Erkennungsverfahren für Permanentgravuren oder Defekte in den Brillengläsern oder Rohlingen können durch diese Ausgestaltung des Transportbehälters mit in den entsprechenden Aufnahmen angeordneten Brillengläsern oder Rohlingen durchgeführt werden. Eine Entnahme aus dem Transportbehälter ist nicht erforderlich. Die Aufnahme des Transportbehälters dient unmittelbar als Brillenglas- oder Brillenglasrohlinghalter.

Anstelle (oder zusätzlich zu Fenstern oder Öffnungen) kann der Transportbehälter auch eine Lichtleitereinrichtung zur Beaufschlagung des in der Aufnahme aufgenommenen Brillenglases oder Brillenglasrohlings mit Licht aufweisen. Als Lichtleiter werden transparente Bauteile wie Fasern, Röhren oder Stäbe bezeichnet, die Licht über kurze oder lange Strecken transportieren.

Die Lichtleitung wird dabei durch Reflexion an der Grenzfläche des Lichtleiters entweder durch Totalreflexion auf Grund eines geringeren Brechungsindex das den Lichtleiter umgebenden Mediums oder durch Verspiegelung der Grenzfläche erreicht. Die Lichtleitereinrichtung kann z.B. eine Einkoppelschnittstelle zum Einkoppeln von Licht einer externen oder einer internen Lichtquelle aufweisen. Extern ist die Lichtquelle dann, wenn sie nicht Bestandteil des Transportbehälters ist. Eine interne Lichtquelle ist Bestandteil des Transportbehälters und wird mit diesem von Bearbeitungsstation zu Bearbeitungsstation mitgeführt. Die Lichtleitereinrichtung ist so geometrisch ausgebildet und/oder ausgerichtet, dass das eingekoppelte Licht auf das Brillenglas oder den Brillenglasrohling gerichtet wird, wenn es bzw. er sich in der Aufnahme in der bestimmungsgemäß vorgesehenen Position angeordnet ist.

Wie bereits vorstehend ausgeführt ist, kann der Transportbehälter wahlweise mit einem internen Leuchtmittel bzw. einer internen Lichtquelle zur Beaufschlagung des in der Aufnahme aufgenommenen Brillenglases oder Brillenglasrohlings mit Licht ausgestattet sein. Das Leuchtmittel bzw. die Lichtquelle kann so angeordnet sein, dass das von ihm bzw. ihr ausgehende Licht unmittelbar auf den in der Aufnahme liegenden Brillenglasrohling oder das in der Aufnahme befindliche Brillenglas trifft. Es kann auch eine indirekte Beleuchtung über einen Spiegel oder einen Reflektor erfolgen oder auch über die vorstehend genannte Lichtwellenleitereinrichtung. Die Lichtquelle kann als LED-, insbesondere OLED-, EL-, insbesondere TFEL-Beleuchtung ausgebildet sein. Die Lichtquelle kann als kontrastoptimierte Hintergrundbeleuchtung, als flächige, diffuse Beleuchtung, insbesondere als LED-Array oder Leuchtmittel mit Diffusor ausgebildet sein.

Die elektrische Energieversorgungseinrichtung nach dem Merkmal (xiii) kann in Form eines in den Transportbehälter integrierten Akkumulators oder einer integrierten Batterie ausgebildet sein. Der Transportbehälter kann eingebettete Kontakte aufweisen, über die die elektrische Energieversorgungseinrichtung, insbesondere der integrierte Akkumulator aufgeladen werden kann bei Durchfahrt des Transportbehälters durch eine entsprechende Bearbeitungsstation. Die Ladung kann in einer alternativen Ausführung auch kontaktlos, insbesondere z.B. induktiv, erfolgen. Es können auch eingebetteten Kontakte für eine Datenübertragung oder auch eingebettete Kontakte in Form von Buskontakten vorhanden sein.

Wie oben bereits ausgeführt wurde, bedürfen die bei der Herstellung von Brillengläsern zum Einsatz kommenden Messeinrichtungen regelmäßig der Beleuchtung des Brillenglases oder des Brillenglasrohlings im Durchlichtverfahren. Selbst wenn diese Messeinrichtungen bauraumbedingt nicht innerhalb des o.a. Würfelvolumens von 40 cm x 40 cm x 40 cm Platz finden und daher als Bestandteil der Transporteinrichtung ausscheiden, ist es vorteilhaft, wenn die in der Transporteinrichtung befindlichen Brillengläser oder Brillenglasrohlinge zur Durchführung der Messung mit der Messeinrichtung nicht entnommen zu werden brauchen. Zusätzlich oder anstelle einer vorstehend beschriebenen Lichtquelle oder eines Leuchtmittels kann nach einer erfindungsgemäßen Variante entsprechend dem Merkmal (ixx) ein Reflektor zur Beaufschlagung des in der Aufnahme aufgenommenen Brillenglases oder Brillenglasrohlings vorhanden sein, welcher das in der Aufnahme aufgenommene Brillenglas oder den in der Aufnahme aufgenommenen Brillenglasrohling transmittierendes Licht wieder auf das Brillenglas oder den Brillenglasrohling zurück reflektiert. Dieser Reflektor kann z.B. als Retroreflektor ausgebildet sein, wie er in den Dokumenten WO 2005/017482 A1 oder der EP 2 597 451 A2 beschriebenen Vorrichtungen zum Einsatz kommt. Der (Retro-)Reflektor kann fest installiert oder austauschbar ausgebildet sein. Er kann auch beweglich, insbesondere drehbar, installiert sein. Bestandteil des Transportbehälters kann auch ein die Bewegung des (Retro-)Reflektors bewerkstellender Aktuator, insbesondere ein Motor, sein. Es ist auch möglich, dass eine Kopplungseinrichtung für einen externen Aktuator welcher eine Bewegung des (Retro-) Reflektors erzeugt, vorgesehen ist, welche Bestandteil des Transportbehälters ist.

Unter einem aktiven drahtlosen Informationsübertragungssystem nach dem Merkmal (xx) ist ein Informationsübertragungssystem zu verstehen, welches über eine eigene Energieversorgungseinrichtung verfügt. Es unterscheidet sich von einem ID-Tag, insbesondere einem RFID-Tag, welcher wie bei passiven Transpondern üblich, die zur Kommunikation und zur Abarbeitung interner Prozesse benötigte Energie ausschließlich aus dem Feld der Sende-/Empfangseinheit bezieht. Beispiele für derartige aktive drahtlose Informationsübertragungssysteme nach dem Merkmal (xx) sind Bluetooth- oder WiFi-Systeme oder dergleichen.

Da die grundlegende Idee der Erfindung, wie oben im Detail ausgeführt wurde, die Bereitstellung der Möglichkeit zur Durchführung von Messungen an dem Brillenglas oder dem Brillenglasrohling ist, ohne diesen aus dem Transportbehälter zu entnehmen, zielt das Merkmal (xxi) auf eine Fixiereinrichtung zum selbsttätigen Fixieren des Brillenglases oder des Brillenglasrohlings in einer Fixierposition ab. Damit ist sichergestellt, dass die Messung an dem vorgesehenen Ort auf dem Brillenglas oder dem Brillenglasrohling stattfinden kann.

Die eingangs gestellte erste Aufgabe wird durch wenigstens eine der vorstehend im Detail beschriebenen Maßnahmen vollumfänglich gelöst.

In einer Weiterbildung der Erfindung ist vorgesehen, dass wenigstens eines der transparenten Fenster nach (ii) bis (iv) oder (vii) bis (ix) und/oder die Messeinrichtung nach (i) und/oder die Lichtleitereinrichtung nach (xi) und/oder das Leuchtmittel oder die Lichtquelle nach (xii) und/oder die elektrische Energieversorgungseinrichtung nach (xiii) und/oder der Reflektor nach (ixx) und/oder das aktive drahtlose Informationsübertragungssystem nach (xx) auswechselbar ausgebildet ist. Durch die auswechselbare Ausgestaltung wird es zum einen möglich, zum Verschleiß neigende Komponenten rechtzeitig vor deren Ausfall zu ersetzen und zum anderen können die Komponenten an den jeweiligen Messzweck oder die jeweilige Messapparatur angepasst werden. Letzteres ermöglicht insbesondere die Verwendung identisch ausgebildeter Transportbehälter für eine Vielzahl sich unterscheidender Brillengläser oder Brillenglasrohlinge.

Die Lichtleitereinrichtung nach dem Merkmal (xi) kann z.B. wenigstens einen eine oder mehrere Lichtleitfasern, eine oder mehrere Lichtleitkabel, einen oder mehrere Lichtleitstäbe und/oder eine oder mehrere planare Lichtleiterstrukturen umfassen. Während Lichtleitkabel und Lichtleitstäbe und planare Lichtleiterstrukturen überwiegend zu Abbildungs- und Beleuchtungszwecken eingesetzt werden, eignen sich planare Lichtleiterstrukturen und Lichtleitfasern insbesondere (auch) zur Datenübertragung.

Eine Weiterbildung der Erfindung sieht vor, dass die Messeinrichtung nach (i) und/oder die Lichtleitereinrichtung nach (xi) und/oder das Leuchtmittel oder die Lichtquelle nach (xii) und/oder die elektrische Energieversorgungseinrichtung nach (xiii) und/oder der Reflektor nach (ixx) und/oder das aktive drahtlose Informationsübertragungssystem nach (xx) eine Schnittstelle zum externen Ansteuern aufweist. Damit wird erreicht, dass die in dem Transportbehälter integrierten Bestandteile bzw. Komponenten genau dann mit der gewünschten Funktion beaufschlagt bzw. mit der vorbestimmten Funktionalität ausgestattet werden (können) wenn sie sich insbesondere in einer Bearbeitungsstation oder einer Messstation, also an einem vorbestimmten Ort befinden.

Das Leuchtmittel oder die Lichtquelle nach dem Merkmal (xii) kann zur Musterprojektion ausgebildet sein. Die Projektion eines Musters auf das in der Aufnahme des Transportbehälters befindliche Brillenglas oder den in der Aufnahme aufgenommenen Brillenglasrohling dient dazu die Form des Brillenglases, insbesondere die Topografie oder die optische Wirkung an verschiedenen Punkten indirekt aufzunehmen, indem das projizierte und durch die Brillenglasgeometrie deformierte Muster durch eine Bilderkennungs- und Bildverarbeitungseinrichtung erkannt und ausgewertet und z.B. ein Soll-/Ist-Abgleich durchgeführt wird.

Eine Weiterbildung der Erfindung ist dadurch gekennzeichnet, dass der Transportbehälter evakuierbar ausgebildet ist. Eine evakuierbare Ausbildung erfordert zum einen ein luftdicht verschließbares Gehäuse und zum anderen im Regelfall eine Schnittstelle mit einem Ventil, um die Luft im Innern des Gehäuses des Transportbehälters absaugen zu können. Unter evakuierbar versteht man nach der vorliegenden Erfindung, dass ein Unterdruck von 10⁻⁵ Pa bis ca. 1000 Pa, vorzugsweise zwischen 10⁻⁴ Pa und 500 Pa, weiter vorzugsweise zwischen 10⁻³ Pa und 100 Pa, höchst vorzugsweise zwischen 10⁻² Pa und 10 Pa gegenüber dem Umgebungsluftdruck von regelmäßig 1013 hPa erzeugt werden kann. Eine evakuierbare Ausbildung des Transportbehälters ist insbesondere dann von Vorteil, wenn die Oberfläche des Brillenglases oder des Brillenglasrohlings keiner Feuchtigkeit oder Fremdpartikeln ausgesetzt werden darf. Dies ist insbesondere dann wichtig, wenn auf die Oberfläche des Brillenglases oder des Brillenglasrohlings eine Beschichtung appliziert werden soll.

Eine weitere Weiterbildung der Erfindung ist dadurch gekennzeichnet, dass der Transportbehälter antistatisch ausgebildet ist. Als Antistatika werden Stoffe bezeichnet, welche, als Additiv zugegeben, die statische Aufladung von Gegenständen verhindern bzw. abschwächen. Die additive Zugabe kann zum Volumenmaterial oder in Form einer Beschichtung erfolgen. Die elektrostatische Aufladung verringern Antistatika entweder durch eine verbesserte Ableitung überschüssiger elektrischer Ladungen, sprich: einen niedrigeren ohmschen Widerstand, oder eine Verminderung der Reibung. Eine antistatische Ausbildung des Transportbehälters hat insbesondere den Vorteil, dass dieser weniger verschmutzt und damit eine wiederholte Verwendung möglich ist, ohne den Transportbehälter reinigen zu müssen. Typisch für einen erfindungsgemäß ausgestalteten Transportbehälter sind Werte im Bereich zwischen 10 Ohm und 10⁹ Ohm, vorzugsweise zwischen 100 Ohm und 10⁸ Ohm, weiter vorzugsweise zwischen 1000 Ohm und 10⁷ Ohm für den ohmschen Flächenwiderstand und Werte im Bereich zwischen µ = 0,1 bis 0,9, vorzugweise zwischen µ = 0,2 bis 0,8, weiter vorzugsweise zwischen µ = 0,3 bis 0,7 für die (Gleit-)Reibung.

Eine andere Ausgestaltung des Transportbehälters besteht darin, dass der Transportbehälter eine elastische Auflagefläche aufweist. Unter elastischer Auflagefläche soll im Rahmen der Erfindung eine Auflagefläche verstanden werden, die gegenüber dem übrigen Gehäuse eine höhere Elastizität aufweist. Elastizität ist die Eigenschaft eines Körpers oder Werkstoffes, unter Krafteinwirkung seine Form zu verändern und bei Wegfall der einwirkenden Kraft in die Ursprungsform zurückzukehren. Um dies rechnerisch zielorientiert behandeln zu können, wird die Elastizität von Materialien mit dem Elastizitätsmodul, dem Kompressionsmodul und dem Schubmodul detailliert beschrieben. Diese drei Moduln sind über die Poissonzahl miteinander verknüpft. Der Elastizitätsmodul beschreibt den Zusammenhang zwischen Spannung und Dehnung bei der Verformung eines festen Körpers bei linear elastischem Verhalten. Mit dem Kompressionsmodul wird berechnet, welche allseitige Druckänderung nötig ist, um eine bestimmte reversible Volumenänderung hervorzurufen. Der Schubmodul gibt Auskunft über die lineare elastische Verformung eines Bauteils infolge einer Scherkraft oder Schubspannung. Typisch für eine erfindungsgemäß ausgestaltete Auflagefläche sind Werte im Bereich zwischen 0,003 bis 0,5 GPa für den Elastizitätsmodul und Werte im Bereich zwischen 0,00001 bis 0,3 GPafür den Schubmodul.

In einer weiteren Variante der Erfindung ist vorgesehen, dass die Auflagefläche eine "Shore Härte A" nach DIN ISO 7619-1 mit einem Wert zwischen 10 und 80 aufweist.

Die Auflagefläche kann z.B. als Gelkissen für einen schonenden Transport ausgebildet sein.

Eine andere erfindungsgemäße Variante des Transportbehälters besteht darin, dass eine Steuerkurve als Zwangsführung vorhanden ist. Diese Steuerkurve ist außen am Gehäuse des Transportbehälters angebracht, vorzugsweise an dessen Seitenwänden. Eine derartige Steuerkurve dient als Zwangsführung für den Transportbehälter während dessen Transport von und zu einer Bearbeitungs- oder Messstation.

Der erfindungsgemäße Transportbehälter kann noch eine Vielzahl weiterer Eigenschaften oder Komponenten umfassen. Das Material, aus dem der Transportbehälter besteht kann umweltfreundlich, Stichwort "grüner Fußabdruck" ausgebildet sein. Insbesondere kann das Material kompostierbar (z.B. Zellulose o.ä.), biologisch abbaubar, essbar (z.B. Maisstärke o.ä.) und/oder recycelbar ausgebildet sein.

Weiter kann der Transportbehälter als preisgünstiges Tiefziehteil, ähnlich Polyethylen für Lebensmittelverpackungen für Wurst/Käse oder als Blisterbehälter ausgebildet sein. Der Deckel kann optional aufgeschweißt, geklebt, geklipst und/oder wiederverschließbar ausgebildet sein. Soweit der Transportbehälter evakuierbar ausgebildet ist, kann er umgekehrt auch mit einer Schutzatmosphäre (Material- und Oberflächeneigenschaften bleiben erhalten) beaufschlagt werden.

Deckel, Boden und ggf. Wände sowie Klappen oder dergleichen des Transportbehälters können z.B. wegschwenkbar, klappbar oder entfernbar ausgebildet sein (Staubschutz, auch für Ausheber, optische Öffnungen).

Die Geometrie des Transportbehälters kann insbesondere auch kontrastoptimiert für eine Bilderkennung ausgebildet sein. Konkret bedeutet dies, dass die Ablagenester für die Brillengläser eine bestimmte Farbgebung und Materialstruktur aufweisen.

Die Farbe für optische Messverfahren, wie z.B. Schwarz, Weiß, Grau, Grün, Rot, kann an die Bilderkennung angepasst sein. Eine Anpassung an die Bilderkennung bedeutet, dass die Farbe in besonderem Maße kontraststeigernd wirkt, um bestimmte Merkmale auf dem Transportgut besser zu erkennen.

Der Transportbehälter kann Störkonturen aufweisen, die für optische Messverfahren und/oder die Bilderkennung optimiert sind. Konkret bedeutet dies, dass in den optischen Strahlengang eine gelochte Platte eingebracht wird, die Teile davon abschattet bzw. abblendet. Somit kann bei Beaufschlagung des Aufbaus mittels UV-Strahlung von außen und Betrachtung des Bildes von der gegenüberliegenden Seite durch eine Kamera oder fotoaktive Sensoren die Position und das Vorhandensein des Transportguts erkannt werden.

Ähnlich wie in der WO 2010/028741 A1 beschrieben kann der Transportbehälter eine Koppeleinrichtung aufweisen, um diesen mit einem Transportbehälter gleicher oder ähnlicher Ausführung lösbar zu verbinden.

Der erfindungsgemäße Transportbehälter kann eine Eingreifgeometrie für die Handhabung, insbesondere Greifer oder Messtechnik aufweisen, welche ggf. zusammen mit der o.a. Steuerkurve eine Zwangsführung darstellen können.

Es kann eine Spannzange und/oder ein Federhalter für das Brillenglas oder den Brillenglasrohling etc. mit angespritzt (z.B. in Form eines Festkörpergelenks) oder einklickbar sein. Es kann eine Aktivierung über einen externen Aktuator mit Stößel oder den Bandantrieb nutzend (Kulisse, Steuerkurve...) erfolgen. Der Vorteil besteht darin, dass das aufgenommene Brillenglas oder der aufgenommene Brillenglasrohling stets zentriert angeordnet ist. Das aufgenommene Brillenglas oder der aufgenommene Brillenglasrohling kann dann auch für einen Greifer positioniert sein, so dass sogar Boden, Tragstruktur unten usw. entfallen können.

Der Transportbehälter kann in einer Ausführungsvariante eine Schnappverbindung zum Einrasten eines RFID-Tags/Chips umfassen. Der RFID-Tag/Chip oder eine Beschriftung oder eine Farbcodierung am Transportbehälter kann einen Code mit Unique ID/Fertigungsdaten/LCM (Service-Intervalle, Reinigung etc.) aufweisen.

Der Transportbehälter kann faltbar oder steckbar ausgebildet sein.

Das eingangs genannte erfindungsgemäße Verfahren zum Herstellen eines Brillenglases aus einem Brillenglasrohling, bei dem das Brillenglas oder der Brillenglasrohling in einer Aufnahme eines Transportbehälters aufgenommen wird, ist dadurch gekennzeichnet, dass wenigstens einer der Schritte aus der nachfolgend angegebenen Gruppe ausgeführt wird, während das Brillenglas oder der Brillenglasrohling in der Aufnahme des Transportbehälters aufgenommen ist:
(i) Messen wenigstens einer Eigenschaft des in der Aufnahme aufgenommenen Brillenglases oder Brillenglasrohlings mit einer externen Messeinrichtung
(ii) Messen wenigstens einer Eigenschaft des in der Aufnahme aufgenommenen Brillenglases oder Brillenglasrohlings mit einer Messeinrichtung, die Bestandteil des Transportbehälters ist
(iii) Beaufschlagen des in der Aufnahme aufgenommenen Brillenglases oder Brillenglasrohlings mit Durchlicht durch ein in einem Boden des Transportbehälters befindliches transparentes Fenster
(iv) Beaufschlagen des in der Aufnahme aufgenommenen Brillenglases oder Brillenglasrohlings mit Durchlicht durch ein in einem Boden des Transportbehälters befindliches transparentes Fenster und ein in einem gegenüberliegend angeordneten Deckel des Transportbehälters befindliches transparentes Fenster
(v) Beaufschlagen des in der Aufnahme aufgenommenen Brillenglases oder Brillenglasrohlings mit Durchlicht durch ein in einem Boden des Transportbehälters befindliches transparentes Fenster und eine in einem gegenüberliegend angeordneten Deckel des Transportbehälters befindliche Öffnung
(vi) Beaufschlagen des in der Aufnahme aufgenommenen Brillenglases oder Brillenglasrohlings mit Durchlicht durch eine in einem Boden des Transportbehälters befindliche Öffnung
(vii) Beaufschlagen des in der Aufnahme aufgenommenen Brillenglases oder Brillenglasrohlings mit Durchlicht durch eine in einem Boden des Transportbehälters befindliche Öffnung und eine in einem gegenüberliegend angeordneten Deckel des Transportbehälters Öffnung
(viii) Beaufschlagen des in der Aufnahme aufgenommenen Brillenglases oder Brillenglasrohlings mit Durchlicht durch eine in einem Boden des Transportbehälters befindliche Öffnung und ein in einem gegenüberliegend angeordneten Deckel des Transportbehälters befindliches transparentes Fenster
(ix) Beaufschlagen des in der Aufnahme aufgenommenen Brillenglases oder Brillenglasrohlings mit Durchlicht durch ein in einer ersten Seitenwand des Transportbehälters befindliches transparentes Fenster und ein in einer gegenüberliegend angeordneten Seitenwand des Transportbehälters befindliches transparentes Fenster
(x) Beaufschlagen des in der Aufnahme aufgenommenen Brillenglases oder Brillenglasrohlings mit Durchlicht durch ein in einer ersten Seitenwand des Transportbehälters befindliches transparentes Fenster und eine in einer gegenüberliegend angeordneten Seitenwand des Transportbehälters befindliche Öffnung
(xi) Beaufschlagen des in der Aufnahme aufgenommenen Brillenglases oder Brillenglasrohlings mit Durchlicht durch eine in einer ersten Seitenwand des Transportbehälters befindliche Öffnung und eine in einer gegenüberliegend angeordneten Seitenwand des Transportbehälters befindliche Öffnung
(xii) Beaufschlagen des in der Aufnahme aufgenommenen Brillenglases oder Brillenglasrohlings mit Licht durch eine Lichtleitereinrichtung, welche Bestandteil des Transportbehälters ist
(xiii) Beleuchten des in der Aufnahme aufgenommenen Brillenglases oder Brillenglasrohlings mit einem Leuchtmittel oder eine Lichtquelle, welches Bestandteil des Transportbehälters ist
(ixx) Beaufschlagen des in der Aufnahme aufgenommenen Brillenglases oder Brillenglasrohlings mit von einem Reflektor des Transportbehälters reflektiertem Licht, welches zuvor das in der Aufnahme aufgenommene Brillenglas oder den in der Aufnahme aufgenommenen Brillenglasrohling transmittiert hat
(xx) Übertragen von Information von einem aktiven drahtlosen Informationsübertragungssystem, welches Bestandteil des Transportbehälters ist
(xxi) Laden einer elektrischen Energieversorgungseinrichtung, welche Bestandteil des Transportbehälters ist, über eine Schnittstelle an dem Transportbehälter
(xxii) Fixieren des Brillenglases oder des Brillenglasrohlings in einer Fixierposition mittels einer automatischen Fixiereinrichtung, welche Bestandteil des Transportbehälters ist.

Das Messen wenigstens einer Eigenschaft des in der Aufnahme aufgenommenen Brillenglases oder Brillenglasrohlings mit einer externen Messeinrichtung entsprechend dem oben angegebenen Merkmal (i) kann z.B. die Detektion von Defekten oder Permanentgravuren mit einem z.B. in der WO 2005/017482 A1 oder der EP 2 597 451 A2 beschriebenen Vorrichtung erfolgen. Dabei wird sich zunutze gemacht, dass das Brillenglas oder der Brillenglasrohling in der Aufnahme des Transportbehälters wie in einem vorrichtungseigenen Halter angeordnet ist. Die Ausgestaltung des Transportbehälters selbst und insbesondere die Existenz einer Aufnahme für das Brillenglas oder den Brillenglasrohling erlaubt es, darauf zu verzichten, das Brillenglas oder den Brillenglasrohling entnehmen zu müssen und das Brillenglas oder den Brillenglasrohling in dem vorrichtungseigenen Halter anzuordnen. Es muss lediglich dafür Sorge getragen werden, dass der Transportbehälter sich an der Stelle oder dem Ort befindet, an dem die Durchführung der Messung erfolgen kann.

Das Messen wenigstens einer Eigenschaft des in der Aufnahme aufgenommenen Brillenglases oder Brillenglasrohlings mit einer externen Messeinrichtung entsprechend dem oben angegebenen Merkmal (i) kann z.B. auch ein automatisches Detektieren und Auslesen eines Data Matrix Codes mit einer in der EP 3 255 416 A1 beschriebenen Vorrichtung sein. Es braucht wiederum lediglich dafür Sorge getragen werden, dass der Transportbehälter sich an der Stelle oder dem Ort befindet, an dem die Durchführung der Messung erfolgen kann.

Die Durchführung der vorstehenden Messungen ist insbesondere dann leicht möglich, wenn Boden und Deckel wahlweise eine Öffnung oder ein transparentes Fenster zur Durchlichtbeleuchtung aufweisen. Es kann auch ein Retroreflektor integraler Bestandteil des Transportbehälters sein. Oder der Transportbehälter kann alternativ auch eine Aussparung aufweisen, in die ein Retroreflektor eingeschwenkt werden kann.

Eine Alternativvariante des erfindungsgemäßen Verfahrens besteht entsprechend dem Verfahrensmerkmal (ii) in einem Messen wenigstens einer Eigenschaft des in der Aufnahme aufgenommenen Brillenglases oder Brillenglasrohlings mit einer Messeinrichtung, die Bestandteil des Transportbehälters selbst ist. Insbesondere kann eine Messeinrichtung der in den Dokumenten WO 2005/017482 A1, EP 2 597 451 A2 oder EP 3 255 416 A1 beschriebenen Art vollumfänglich in den Transportbehälter integriert sein.

Viele Messverfahren, die zur oder während der Brillenglasherstellung zum Einsatz kommen, bedürfen der Beaufschlagung des Brillenglasrohlings oder des Brillenglases mit Licht. Die Merkmale (iii) bis (xii) stellen verschiedene Alternativen bereit, wie dies mit Hilfe einer nicht zum Transportbehälter gehörenden externen Lichtquelle gewährleistet werden kann, nämlich:
(iii) Beaufschlagen des in der Aufnahme aufgenommenen Brillenglases oder Brillenglasrohlings mit Durchlicht durch ein in einem Boden des Transportbehälters befindliches transparentes Fenster
(iv) Beaufschlagen des in der Aufnahme aufgenommenen Brillenglases oder Brillenglasrohlings mit Durchlicht durch ein in einem Boden des Transportbehälters befindliches transparentes Fenster und ein in einem gegenüberliegend angeordneten Deckel des Transportbehälters befindliches transparentes Fenster
(v) Beaufschlagen des in der Aufnahme aufgenommenen Brillenglases oder Brillenglasrohlings mit Durchlicht durch ein in einem Boden des Transportbehälters befindliches transparentes Fenster und eine in einem gegenüberliegend angeordneten Deckel des Transportbehälters befindliche Öffnung
(vi) Beaufschlagen des in der Aufnahme aufgenommenen Brillenglases oder Brillenglasrohlings mit Durchlicht durch eine in einem Boden des Transportbehälters befindliche Öffnung
(vii) Beaufschlagen des in der Aufnahme aufgenommenen Brillenglases oder Brillenglasrohlings mit Durchlicht durch eine in einem Boden des Transportbehälters befindliche Öffnung und eine in einem gegenüberliegend angeordneten Deckel des Transportbehälters Öffnung
(viii) Beaufschlagen des in der Aufnahme aufgenommenen Brillenglases oder Brillenglasrohlings mit Durchlicht durch eine in einem Boden des Transportbehälters befindliche Öffnung und ein in einem gegenüberliegend angeordneten Deckel des Transportbehälters befindliches transparentes Fenster
(ix) Beaufschlagen des in der Aufnahme aufgenommenen Brillenglases oder Brillenglasrohlings mit Durchlicht durch ein in einer ersten Seitenwand des Transportbehälters befindliches transparentes Fenster und ein in einer gegenüberliegend angeordneten Seitenwand des Transportbehälters befindliches transparentes Fenster
(x) Beaufschlagen des in der Aufnahme aufgenommenen Brillenglases oder Brillenglasrohlings mit Durchlicht durch ein in einer ersten Seitenwand des Transportbehälters befindliches transparentes Fenster und eine in einer gegenüberliegend angeordneten Seitenwand des Transportbehälters befindliche Öffnung
(xi) Beaufschlagen des in der Aufnahme aufgenommenen Brillenglases oder Brillenglasrohlings mit Durchlicht durch eine in einer ersten Seitenwand des Transportbehälters befindliche Öffnung und eine in einer gegenüberliegend angeordneten Seitenwand des Transportbehälters befindliche Öffnung
(xii) Beaufschlagen des in der Aufnahme aufgenommenen Brillenglases oder Brillenglasrohlings mit Licht durch eine Lichtleitereinrichtung, welche Bestandteil des Transportbehälters ist.

Als Alternative oder als Zusatz kann auch ein Beleuchten des in der Aufnahme aufgenommenen Brillenglases oder Brillenglasrohlings mit einem Leuchtmittel oder einer Lichtquelle, welches bzw. welche Bestandteil des Transportbehälters ist, erfolgen, wie dies in obigem Merkmal (xiii) gefordert ist. Als weitere Alternative oder Zusatz kann auch nach Maßgabe des Merkmals (ixx) ein Beaufschlagen des in der Aufnahme aufgenommenen Brillenglases oder Brillenglasrohlings mit von einem Reflektor des Transportbehälters reflektiertem Licht erfolgen, welches zuvor das in der Aufnahme aufgenommene Brillenglas oder den in der Aufnahme aufgenommenen Brillenglasrohling transmittiert hat.

Wahlweise alternativ kann auch ein Übertragen von Information von einem aktiven drahtlosen Informationsübertragungssystem, welches Bestandteil des Transportbehälters ist, erfolgen.

Weiter alternativ kann auch Laden einer elektrischen Energieversorgungseinrichtung, welche Bestandteil des Transportbehälters ist, über eine Schnittstelle an dem Transportbehälter erfolgen. Die elektrische Energieversorgungseinrichtung kann die transportbehältereigenen Verbraucher, insbesondere z.B. Lichtquellen, Leuchtmittel, Motoren z.B. für den o.a. Retroreflektor, Messeinrichtungen, das vorstehend genannte Informationsübertragungssystem einschließlich Prozessor, Speicher sowie Sende- und Empfangseinheit mit elektrischer Energie versorgen.

Vielfach ist es auch notwendig, dass das aufgenommene Brillenglas oder der in der Aufnahme angeordnete Brillenglasrohling nicht nur in der Aufnahme aufliegt, sondern auch fixiert ist, um eine vordefinierte Lage sicherzustellen. Die Erfindung sieht daher wahlweise auch ein Fixieren des Brillenglases oder des Brillenglasrohlings in einer Fixierposition mittels einer automatischen Fixiereinrichtung, welche Bestandteil des Transportbehälters ist, vor. Die automatische Fixiereinrichtung kann in einem Clip mit zu dem aufzunehmenden Brillenglas/Brillenglasrohling formkomplementärer Geometrie bestehen, es ist aber auch möglich, dass ein oder mehrere Aktuatoren für eine vordefinierte Lageorientierung des Brillenglases oder des Brillenglasrohlings sorgen.

Die eingangs gestellte zweite Aufgabe wird durch wenigstens eine der vorstehend im Detail im Zusammenhang mit der Durchführung des erfindungsgemäßen Verfahrens beschriebenen Maßnahmen vollumfänglich gelöst.

Eine besonders vorteilhafte Ausführung der Erfindung besteht darin, das Brillenglas oder den Brillenglasrohling mit dem Transportbehälter als Versandpackung von einem Ort der Herstellung eines Rohzustands zu einem Ort der Weiterbearbeitung zu versenden. Dies betrifft insbesondere Halbfabrikate, die an einem vom Ort des Abgießens abweichenden Ort (häufig sogar in einem anderen Land) rezeptflächen- und randformbearbeitet werden.

In einer vorteilhaften Ausführungsvariante des erfindungsgemäßen Verfahrens ist vorgesehen, dass auf das Brillenglas oder den Brillenglasrohling in wenigstens einem der Schritte (i) bis (ixx) ein Muster oder ein Bild projiziert wird. Eine Muster- oder Bildprojektion ist insbesondere dann erforderlich, wenn die Topografie der Brillengläser mittels einer Kamera samt Bildverarbeitung detektiert und ausgewertet werden soll. Das bekannte projizierte Muster wird entsprechend der Form des zu messenden Brillenglases komplementär verzerrt. Dieses veränderte Bild wird mittels Kamera und Bildverarbeitungssystem in einem Soll-Ist-Abgleich ausgewertet.

Eine weitere Verfahrensvariante ist dadurch gekennzeichnet, dass in wenigstens einem der Schritte (i) bis (ixx) ein Code von dem Brillenglas oder dem Brillenglasrohling ausgelesen wird. Der Code kann z.B. in Form einer Permanentgravur auf dem Brillenglas oder -rohling oder in Form eines Aufklebers oder dergleichen auf dem Brillenglas oder dem Rohling vorliegen. Die Auslesung eines Codes kann z.B. mit Hilfe eines handelsüblichen Code-Lesegerätes erfolgen oder wenn die Anforderungen besonders hoch sind - z.B. durch hohe Auflösung und hohe Pixeldichte - mittels Smartcam oder einer Kamera mit spezieller Optik in Kombination mit kontraststeigernder Beleuchtung, Farbgebung und Hintergrundbeschaffenheit bewerkstelligt werden. Der Code kann z.B. Informationen über die Herstellprozesse, deren Parameter oder auftragsbezogene Daten enthalten und kann daher zur Prozessablaufsteuerung verwendet werden.

Die Erfindung wird nachfolgend anhand der Zeichnung näher beschrieben. Es zeigen:

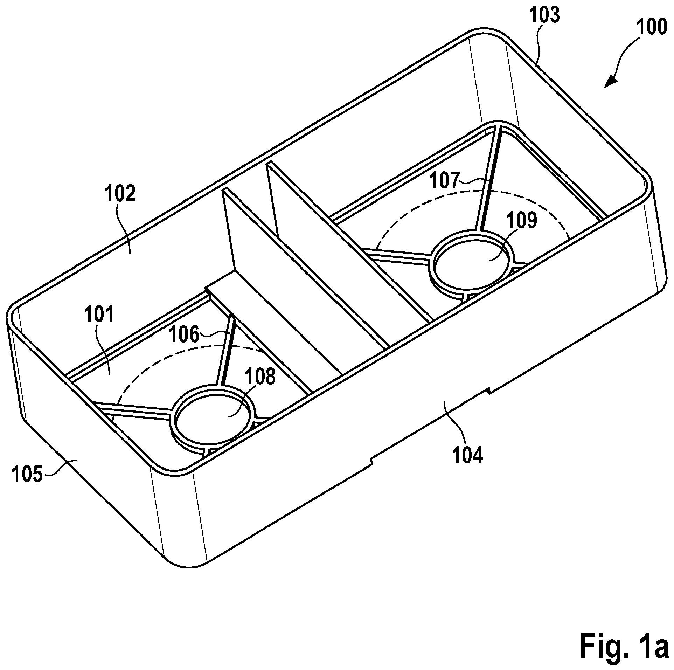

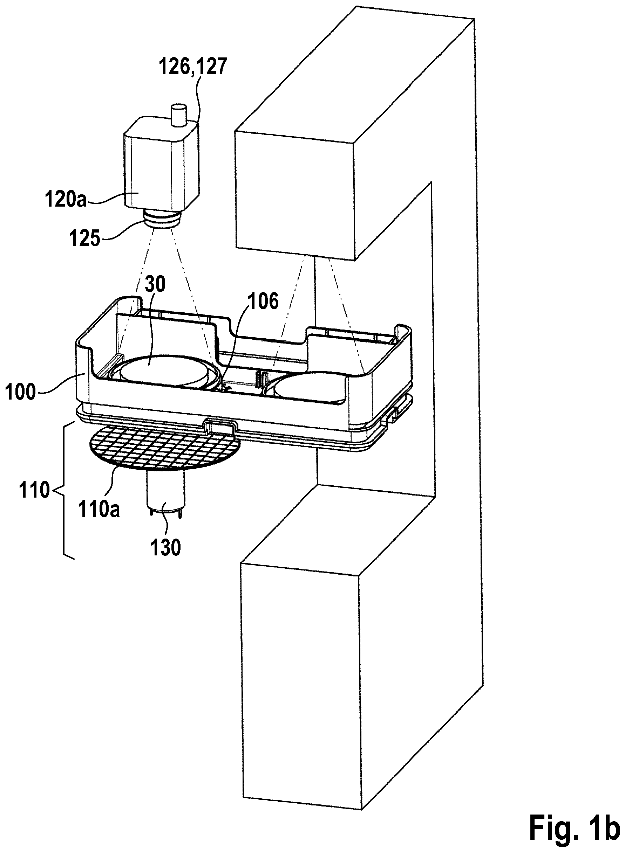

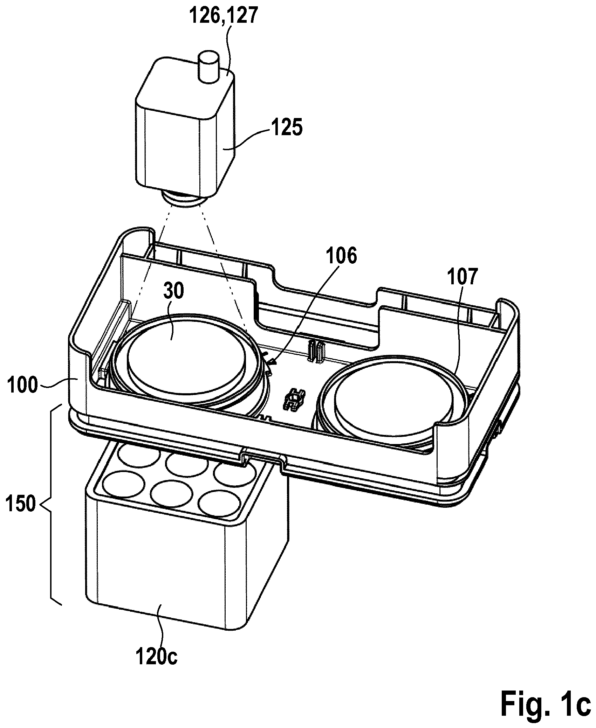

- Figur 1: ein erstes Ausführungsbeispiel eines erfindungsgemäßen Transportbehälters mit einer in einem Boden befindlichen Öffnung zur Beaufschlagung eines in einer Aufnahme aufgenommenen Brillenglases oder Brillenglasrohlings mit Durchlicht
a) Transportbehälter (erste Ausführungsvariante) in perspektivischer Ansicht
b) Transportbehälter (abgewandelte Ausführungsvariante) mit Brillenglasrohling an einer Messeinrichtung zur Messung von Defekten
c) Transportbehälter (abgewandelte Ausführungsvariante) mit Brillenglasrohling an einer anderen Messeinrichtung zur Messung von Defekten
- Figur 2: ein zweites Ausführungsbeispiel eines erfindungsgemäßen Transportbehälters mit Fenstern in einem Boden und in einem Deckel des Transportbehälters zur Beaufschlagung eines in einer Aufnahme aufgenommenen Brillenglases oder Brillenglasrohlings mit Durchlicht
- Figur 3: ein drittes Ausführungsbeispiel eines erfindungsgemäßen Transportbehälters mit einer integrierten Vorrichtung zur Messung von Defekten in einem in einer Aufnahme aufgenommenen Brillenglas oder Brillenglasrohling
- Figur 4: ein viertes Ausführungsbeispiel eines erfindungsgemäßen Transportbehälters mit einer integrierten Vorrichtung zur Projektion eines Musters auf ein in einer Aufnahme aufgenommenes Brillenglas oder einen in einer Aufnahme aufgenommenen Brillenglasrohling
a) Variante mit Lochraster
b) Variante mit Lassergitter
c) Variante mit TFT-Monitor
- Figur 5: ein fünftes Ausführungsbeispiel eines erfindungsgemäßen Transportbehälters mit Schnittstellen zum externen Ansteuern einer Messeinrichtung und eines Akkus
- Figur 6: ein sechstes Ausführungsbeispiel eines erfindungsgemäßen Transportbehälters mit Steuerkurve als Zwangsführung
a) Transportbehälter in perspektivischer Darstellung von oben
b) Transportbehälter in perspektivischer Darstellung von unten

Die Figur 1 zeigt ein erstes Ausführungsbeispiel eines erfindungsgemäßen Transportbehälters 100. Die Figur 1a) zeigt den Transportbehälter 100 in einer Ausführungsvariante in perspektivischer Ansicht. Die Figuren 1b) und 1c) zeigen den Transportbehälter 100 in einer gegenüber der Ausführung nach der Figur 1a) abgewandelten Ausführungsvariante mit Brillenglasrohling 30 an zwei Messeinrichtungen 110, 150 zur Messung von Defekten.

Der Transportbehälter 100 ist quaderförmig in der Art einer Schuhschachtel ausgebildet und umfasst einen Boden 101 sowie vier Seitenwände 102, 103, 104, 105. Die Maße des Quaders sind 25 cm x 12,5 cm x 6,5 cm.

Auf dem Boden 101 sind zwei Aufnahmen 106, 107 der in der WO 2010/028741 A1 beschriebenen Art angeordnet. Jede Aufnahme 106, 107 kann ein Brillenglas oder einen Brillenglasrohling aufnehmen.

Im Zentrum jeder Aufnahme 106, 107 befindet sich jeweils eine Öffnung 108, die insbesondere zur Beaufschlagung eines in einer Jeweiligen Aufnahme 106, 107 aufgenommenen Brillenglases oder Brillenglasrohlings mit Durchlicht dienen kann. Die Öffnung 108 ist kreisrund ausgebildet und weist eine Querschnittsfläche von in der Darstellung 12 cm² auf. Die Querschnittsfläche kann aber im Rahmen der Erfindung eine Querschnittsfläche zwischen 12 und 80 cm² aufweisen. Einen Deckel weist der Transportbehälter 100 nicht auf, so dass Licht durch die Oberseite des Transportbehälters 100 auf das in der Aufnahme 106 oder 107 liegende Brillenglas treffen, dieses transmittieren und durch die bodenseitige Öffnung 108 wieder verlassen kann und umgekehrt.

Die Messeinrichtung 110 nach der Figur 1b) umfasst einen rotierenden Retroreflektor 110a, welcher über einen Motor 130 rotatorisch angetrieben ist. Dem rotierenden Retroreflektor 110a in Bezug auf den Brillenglasrohling 30 gegenüberliegend befindet sich eine Lichtquelle 120a und eine Kamera 125 mit angeschlossenem Prozessor 126 und Speicher 127. Die Funktionsweise dieser Vorrichtung 310 ist beispielsweise in der EP 1646855 A1 oder der EP2597451 A2 beschrieben.

Die Messeinrichtung 150 nach der Figur 1c) umfasst eine Lichtquelle 120c und eine in Bezug auf den Brillenglasrohling 30 gegenüberliegend angeordnete Kamera 125 mit angeschlossenem Prozessor 126 und Speicher 127.

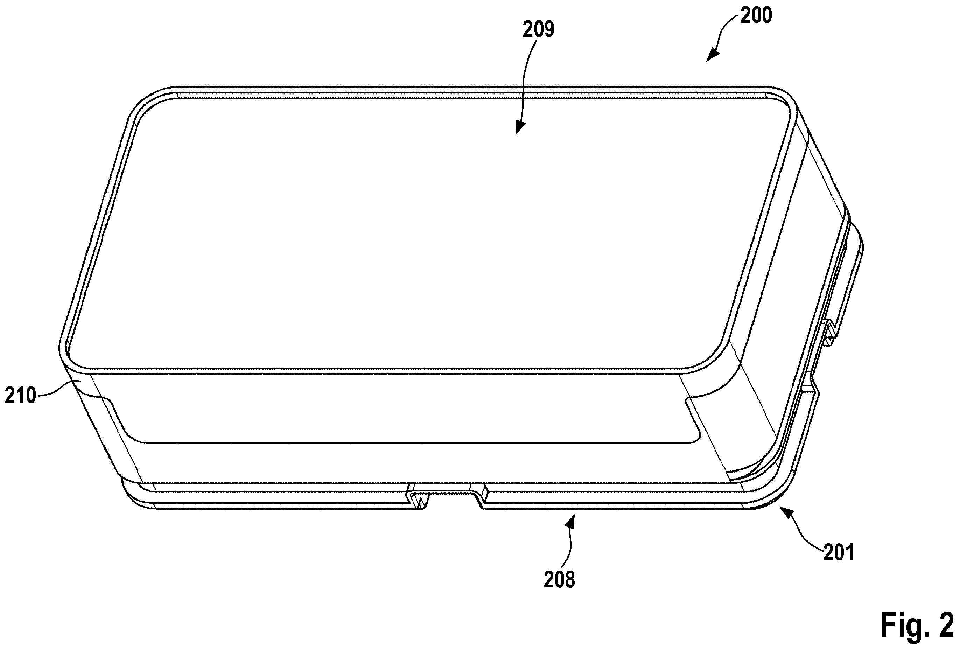

Ein zweites Ausführungsbeispiel eines erfindungsgemäßen Transportbehälters 200 entnimmt man der Figur 2. Anstelle einer Öffnung im Boden weist der Transportbehälter 200 ein Fenster 208 in seinem Boden 201 und ein Fenster 209 in seinem Deckel 210 zur Beaufschlagung eines in einer Aufnahme (hier nicht sichtbar; die Aufnahmen sind aber identisch wie die Aufnahmen 106 und 107 des zuvor beschriebenen Beispiels ausgeführt) aufgenommenen Brillenglases oder Brillenglasrohlings mit Durchlicht auf.

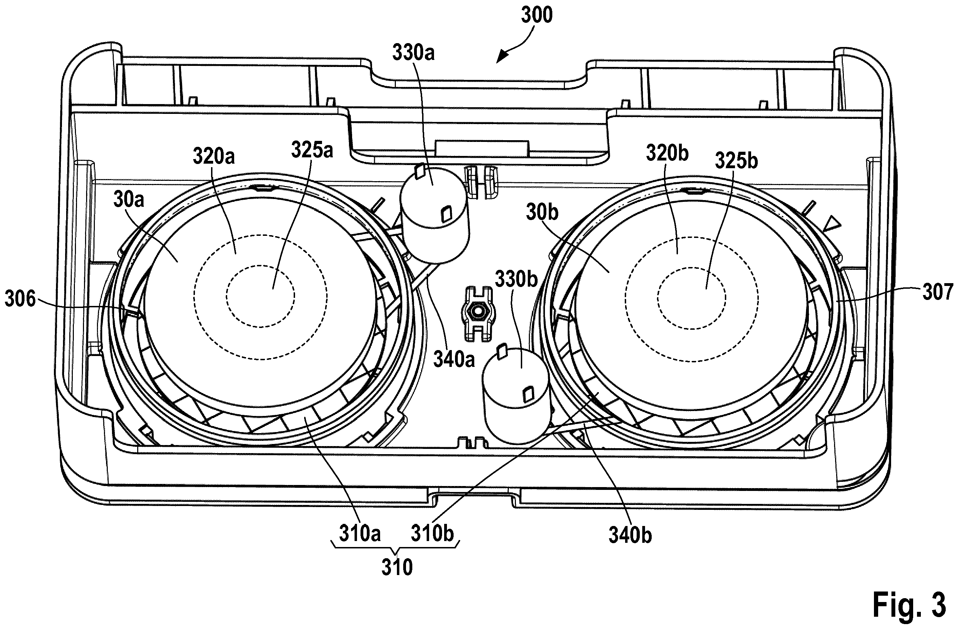

Die Figur 3 zeigt ein drittes Ausführungsbeispiel eines erfindungsgemäßen Transportbehälters 300 mit einer integrierten Vorrichtung 310 zur Messung von Defekten in einem in einer Aufnahme 306, 307 aufgenommenen Brillenglas oder Brillenglasrohling 30a, 30b. Die integrierte Vorrichtung 310 umfasst jeweils einen rotierenden Retroreflektor 310a, 310b, welcher mit einem Riemen 340a, 340b über einen Motor 330a, 330b angetrieben ist. Dem jeweiligen rotierenden Retroreflektor 310a, 310b in Bezug auf den Brillenglasrohling 30a, 30b gegenüberliegend befindet sich jeweils eine Lichtquelle 320a, 320b und eine Kamera 325a, 325b mit angeschlossenem Prozessor und Speicher. Lichtquellen 320a, 320b und Kameras 325a, 325b sind in der Figur 3 zwar strichliert gezeichnet, sie befinden sich jedoch an einem Deckel, der in der Zeichnung aber nicht dargestellt ist. Die Funktionsweise dieser Vorrichtung 310 ist beispielsweise in der EP1646855 A1 oder der EP2597451 A2 beschrieben.

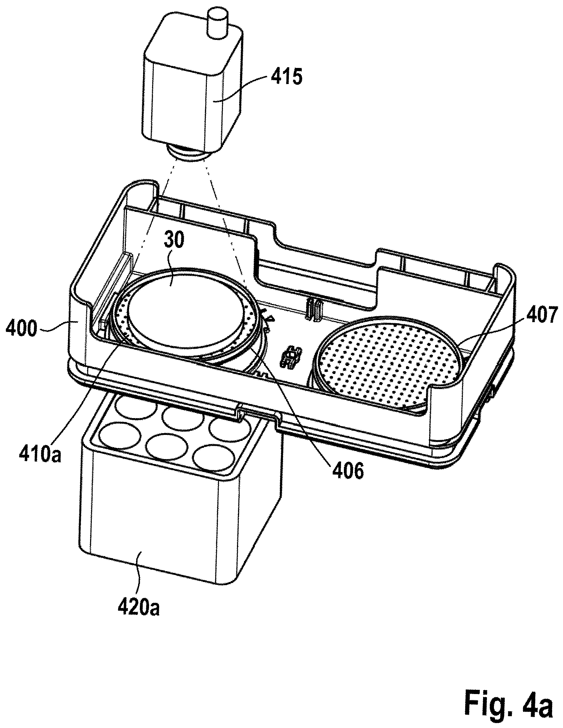

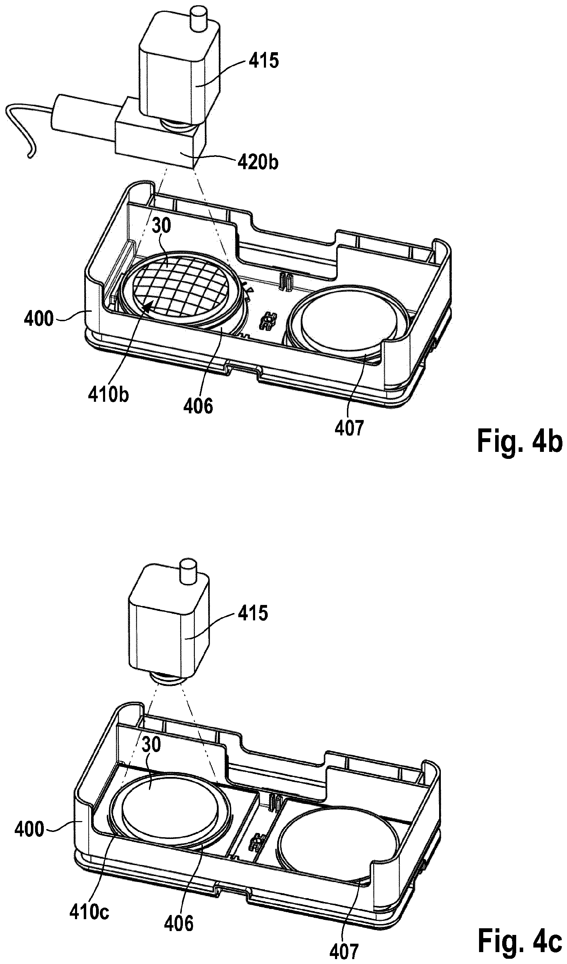

Der Figur 4 entnimmt man ein viertes Ausführungsbeispiel eines erfindungsgemäßen Transportbehälters 400 mit einer (teilweise) integrierten Vorrichtung 410a, 410c bzw. mit einer externen Vorrichtung 410b zur Projektion eines Musters auf ein in einer Aufnahme 406, 407 aufgenommenes Brillenglas oder einen in einer Aufnahme 406, 407 aufgenommenen Brillenglasrohling 30 in drei Ausführungsvarianten a), b) und c).
Die teilweise integrierte Vorrichtung 410a nach der Figur 4a) besteht in einer Auflage mit Lochraster. Zur Projektion des Lochrastermusters ist eine externe Lichtquelle 420a vorhanden, die die Auflage mit Lochraster durch eine Öffnung im Boden des Transportbehälters 400 beleuchtet.

Über dem Transportbehälter 400 ist eine Kamera 415 angeordnet, mit welcher das durch den Brillenglasrohling 30 veränderte Muster erfasst werden kann.

Die externe Vorrichtung 410b nach der Figur 4b) besteht in einer externen Lichtquelle mit Gittergenerator 420a, welche ein Lassergitter erzeugt. Auf den Brillenglasrohling 30 wird das Lassergitter von oben projiziert.

Über dem Transportbehälter 400 ist eine Kamera 415 angeordnet, mit welcher das durch den Brillenglasrohling 30 veränderte Muster erfasst werden kann.

Die vollständig integrierte Vorrichtung 410c nach der Figur 4c) besteht in einer Auflage mit TFT-Monitor, welcher als Mustergenerator wirkt.

Über dem Transportbehälter 400 ist eine Kamera 415 angeordnet, mit welcher das durch den Brillenglasrohling 30 veränderte Muster erfasst werden kann.

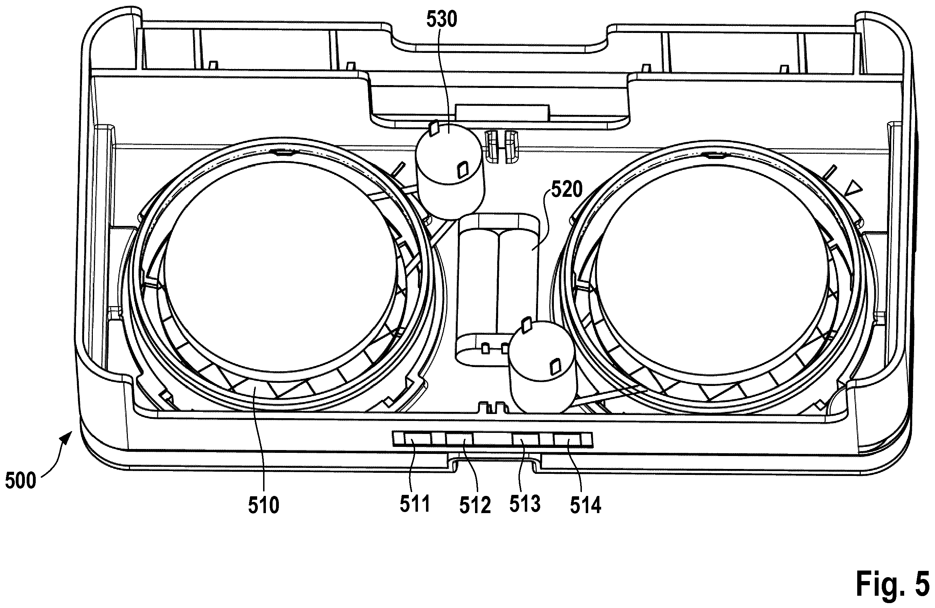

Die Figur 5 zeigt ein fünftes Ausführungsbeispiel eines erfindungsgemäßen Transportbehälters 500 mit einer Mehrzahl an Schnittstellen 511, 512, 513, 514 zum externen Ansteuern eines Akkus 520 und eines motorischen Antriebs 530 für einen Retroreflektor 510.

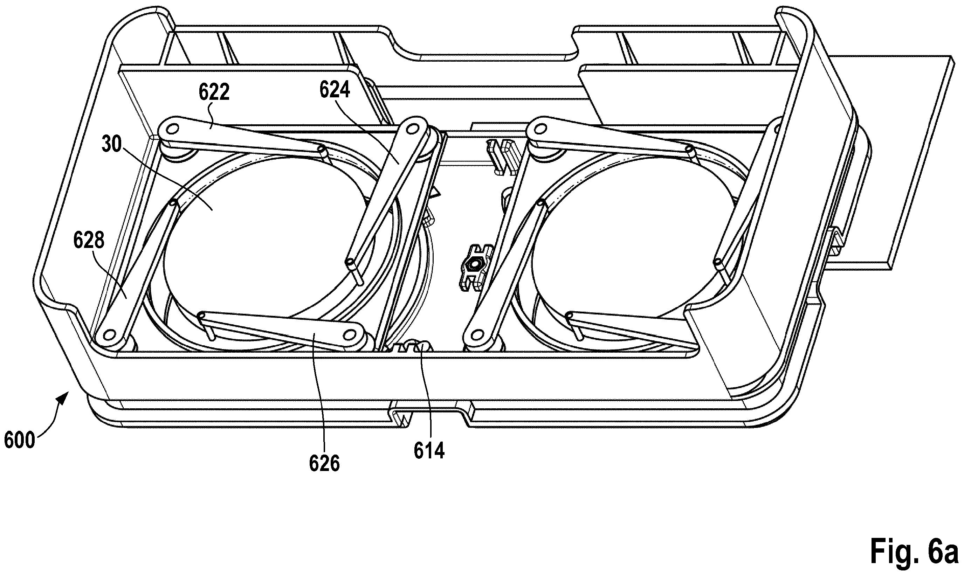

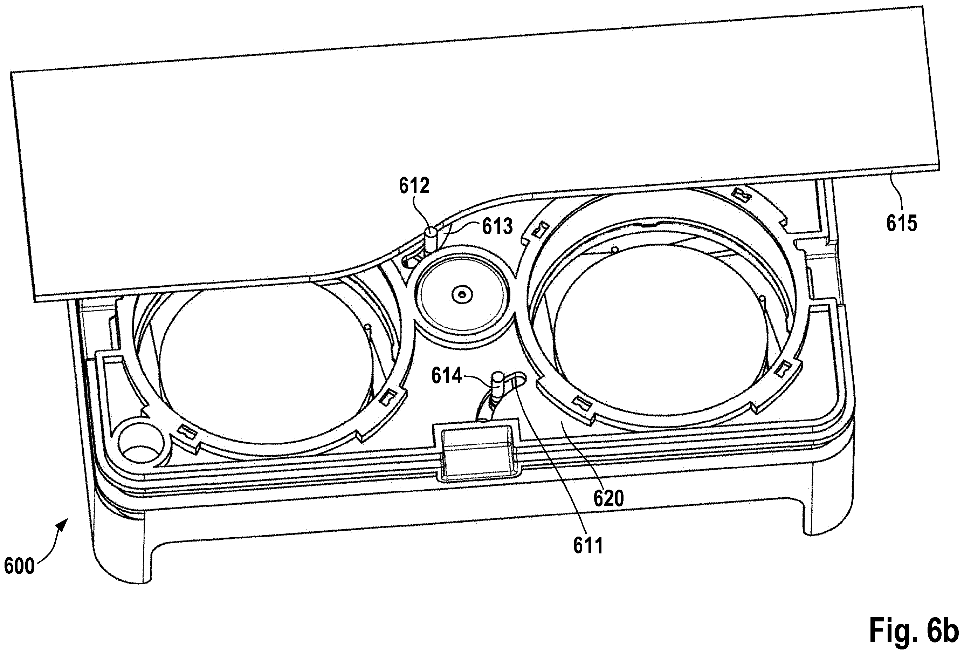

Die Figur 6 zeigt ein sechstes Ausführungsbeispiel eines erfindungsgemäßen Transportbehälters 600 mit Steuerkurve 611, 613 als Zwangsführung. Figur 6a) entnimmt man den Transportbehälter 600 von oben. Durch die Steuerkurve, die z.B. in Form einer oder mehrerer Nuten 611, 613 oder eines oder mehrerer geschwungener Stege (nicht dargestellt) am Boden 620 oder den Seitenwänden (nicht dargestellt) ausgeführt sein kann, werden durch die Vorwärtsbewegung des Transportbehälters 600 auf der Fördertechnik ein oder mehrere Stellhebel 612, 614 wunschgemäß zwangsgeführt bzw. abgelenkt, die ihrerseits einen Mechanismus im Transportbehälter 600 oder außerhalb auslösen. Dies kann z.B. ein Arm zum Zentrieren oder Ausheben der Gläser oder ein Schwungrad sein, an welchem ein Retroreflektor befestigt ist, der sich nur für den Messzeitraum kurzzeitig drehen muss. Im vorliegend in Figur 6 gezeigten Fall werden die Haltearme 622, 624, 626, 628 betätigt.

## Patentansprüche

1. Transportbehälter (100, 200, 300, 400, 500, 600) für Brillengläser oder Brillenglasrohlinge bei der Brillenglasherstellung mit einer Aufnahme (106, 107; 206, 207; 306, 307; 406, 407) zum Aufnehmen eines Brillenglases oder Brillenglasrohlings, **gekennzeichnet durch** wenigstens einen Bestandteil aus der nachfolgend angegebenen Gruppe:
(i) eine Messeinrichtung (310) zum Messen wenigstens einer Eigenschaft des in der Aufnahme (106, 107; 206, 207; 306, 307; 406, 407) aufgenommenen Brillenglases oder Brillenglasrohlings
(ii) einen Boden (101, 201, 301, 401) mit einem transparenten Fenster (208) mit einer transparenten Fläche von wenigstens 5 cm² zur Beaufschlagung des in der Aufnahme (106, 107; 206, 207; 306, 307; 406, 407) aufgenommenen Brillenglases oder Brillenglasrohlings mit Durchlicht
(iii) einen Boden (101, 201, 301, 401) mit einem transparenten Fenster (208) mit einer transparenten Fläche von wenigstens 5 cm² und einen gegenüberliegend angeordneten Deckel (210) mit einem transparenten Fenster (209) mit einer transparenten Fläche von wenigstens 5 cm² zur Beaufschlagung des in der Aufnahme (106, 107; 206, 207; 306, 307; 406, 407) aufgenommenen Brillenglases oder Brillenglasrohlings mit Durchlicht
(iv) einen Boden (101, 201, 301, 401) mit einem transparenten Fenster (208) mit einer transparenten Fläche von wenigstens 5 cm² und einem gegenüberliegend angeordneten Deckel (210) mit einer Öffnung mit einer Fläche von wenigstens 5 cm² zur Beaufschlagung des in der Aufnahme (106, 107; 206, 207; 306, 307; 406, 407) aufgenommenen Brillenglases oder Brillenglasrohlings mit Durchlicht
(v) einen Boden (101, 201, 301, 401) mit einer Öffnung mit einer Fläche von wenigstens 5 cm² zur Beaufschlagung des in der Aufnahme (106, 107; 206, 207; 306, 307; 406, 407) aufgenommenen Brillenglases oder Brillenglasrohlings mit Durchlicht
(vi) einen Boden (101, 201, 301, 401) mit einer Öffnung mit einer Fläche von wenigstens 5 cm² und einem gegenüberliegend angeordneten Deckel mit einer Öffnung mit einer Fläche von wenigstens 5 cm² zur Beaufschlagung des in der Aufnahme (106, 107; 206, 207; 306, 307; 406, 407) aufgenommenen Brillenglases oder Brillenglasrohlings mit Durchlicht
(vii) einen Boden (101, 201, 301, 401) mit einer Öffnung (108, 109) mit einer Fläche von wenigstens 5 cm² und einem gegenüberliegend angeordneten Deckel mit einem transparenten Fenster mit einer transparenten Fläche von wenigstens 5 cm² zur Beaufschlagung des in der Aufnahme (106, 107; 206, 207; 306, 307; 406, 407) aufgenommenen Brillenglases oder Brillenglasrohlings mit Durchlicht
(viii) eine erste Seitenwand mit einem transparenten Fenster mit einer transparenten Fläche von wenigstens 5 cm² und eine gegenüberliegend angeordnete Seitenwand mit einem transparenten Fenster mit einer transparenten Fläche von wenigstens 5 cm² zur Beaufschlagung des in der Aufnahme (106, 107; 206, 207; 306, 307; 406, 407) aufgenommenen Brillenglases oder Brillenglasrohlings mit Durchlicht
(ix) eine erste Seitenwand mit einem transparenten Fenster mit einer transparenten Fläche von wenigstens 5 cm² und eine gegenüberliegend angeordnete Seitenwand mit einer Öffnung mit einer Fläche von wenigstens 5 cm² zur Beaufschlagung des in der Aufnahme (106, 107; 206, 207; 306, 307; 406, 407) aufgenommenen Brillenglases oder Brillenglasrohlings mit Durchlicht
(x) eine erste Seitenwand mit einer Öffnung mit einer Fläche von wenigstens 5 cm² und eine gegenüberliegend angeordnete Seitenwand mit einer Öffnung mit einer Fläche von wenigstens 5 cm² zur Beaufschlagung des in der Aufnahme (106, 107; 206, 207; 306, 307; 406, 407) aufgenommenen Brillenglases oder Brillenglasrohlings mit Durchlicht
(xi) eine Lichtleitereinrichtung zur Beaufschlagung des in der Aufnahme (106, 107; 206, 207; 306, 307; 406, 407) aufgenommenen Brillenglases oder Brillenglasrohlings mit Licht
(xii) ein Leuchtmittel oder eine Lichtquelle zur Beaufschlagung des in der Aufnahme (106, 107; 206, 207; 306, 307; 406, 407) aufgenommenen Brillenglases oder Brillenglasrohlings mit Licht
(xiii) einer elektrischen Energieversorgungseinrichtung
(ixx) einen Reflektor zur Beaufschlagung des in der Aufnahme (106, 107; 206, 207; 306, 307; 406, 407) aufgenommenen Brillenglases oder Brillenglasrohlings mit das in der Aufnahme (106, 107; 206, 207; 306, 307; 406, 407) aufgenommene Brillenglas oder den in der Aufnahme (106, 107; 206, 207; 306, 307; 406, 407) aufgenommenen Brillenglasrohling transmittierendem Licht
(xx) ein aktives drahtloses Informationsübertragungssystem
(xxi) eine Fixiereinrichtung zum selbsttätigen Fixieren des Brillenglases oder des Brillenglasrohlings in einer Fixierposition.

2. Transportbehälter nach Anspruch 1, **dadurch gekennzeichnet, dass** die Messeinrichtung nach (i) wenigstens einen Bestandteil aus der nachfolgend angegebenen Gruppe umfasst:
- eine Vorrichtung zur Vermessung der Oberfläche oder der Topographie der Oberfläche des Brillenglasrohlings oder des Brillenglases
- eine Vorrichtung (310) zur Detektion von Defekten im Brillenglasrohling oder im Brillenglas

3. Transportbehälter nach einem der vorangegangenen Ansprüche, **dadurch gekennzeichnet, dass** wenigstens eines der transparenten Fenster nach (ii) bis (iv) oder (vii) bis (ix) und/oder die Messeinrichtung (310) nach (i) und/oder die Lichtleitereinrichtung nach (xi) und/oder das Leuchtmittel oder die Lichtquelle nach (xii) und/oder die elektrische Energieversorgungseinrichtung nach (xiii) und/oder der Reflektor nach (ixx) und/oder das aktive drahtlose Informationsübertragungssystem nach (xx) auswechselbar ausgebildet ist.

4. Transportbehälter nach einem der vorangegangenen Ansprüche, **dadurch gekennzeichnet, dass** die Lichtleitereinrichtung nach (xi) wenigstens einen Bestandteil aus der nachfolgend angegebenen Gruppe umfasst:
- eine oder mehrere Lichtleitfasern
- eine oder mehrere Lichtleitkabel
- einen oder mehrere Lichtleitstäbe
- einen oder mehrere planare Lichtleiterstrukturen.

5. Transportbehälter nach einem der vorangegangenen Ansprüche, **dadurch gekennzeichnet, dass** die Messeinrichtung (310) nach (i) und/oder die Lichtleitereinrichtung nach (xi) und/oder das Leuchtmittel oder die Lichtquelle nach (xii) und/oder die elektrische Energieversorgungseinrichtung nach (xiii) und/oder der Reflektor nach (ixx) und/oder das aktive drahtlose Informationsübertragungssystem nach (xx) eine Schnittstelle zum externen Ansteuern aufweist.

6. Transportbehälter nach einem der vorangegangenen Ansprüche, **dadurch gekennzeichnet, dass** das Leuchtmittel oder eine Lichtquelle zur Musterprojektion ausgebildet ist.

7. Transportbehälter nach einem der vorangegangenen Ansprüche, **dadurch gekennzeichnet, dass** der Transportbehälter (100, 200, 300, 400, 500, 600) evakuierbar ausgebildet ist.

8. Transportbehälter nach einem der vorangegangenen Ansprüche, **dadurch gekennzeichnet, dass** der Transportbehälter (100, 200, 300, 400, 500, 600) antistatisch ausgebildet ist.

9. Transportbehälter nach einem der vorangegangenen Ansprüche, **dadurch gekennzeichnet, dass** der Transportbehälter (100, 200, 300, 400, 500, 600) eine elastische Auflagefläche aufweist.

10. Transportbehälter nach einem der vorangegangenen Ansprüche, **dadurch gekennzeichnet, dass** eine Steuerkurve (611) als Zwangsführung vorhanden ist.

11. Verfahren zum Herstellen eines Brillenglases aus einem Brillenglasrohling, bei dem das Brillenglas oder der Brillenglasrohling in einer Aufnahme (106, 107; 206, 207; 306, 307; 406, 407) eines Transportbehälters (100, 200, 300, 400, 500, 600) aufgenommen wird, **dadurch gekennzeichnet, dass** wenigstens einer der Schritte aus der nachfolgend angegebenen Gruppe ausgeführt wird, während das Brillenglas oder der Brillenglasrohling in der Aufnahme (106, 107; 206, 207; 306, 307; 406, 407) des Transportbehälters aufgenommen ist:
(i) Messen wenigstens einer Eigenschaft des in der Aufnahme (106, 107; 206, 207; 306, 307; 406, 407) aufgenommenen Brillenglases oder Brillenglasrohlings mit einer externen Messeinrichtung
(ii) Messen wenigstens einer Eigenschaft des in der Aufnahme (106, 107; 206, 207; 306, 307; 406, 407) aufgenommenen Brillenglases oder Brillenglasrohlings mit einer Messeinrichtung (310), die Bestandteil des Transportbehälters ist
(iii) Beaufschlagen des in der Aufnahme (106, 107; 206, 207; 306, 307; 406, 407) aufgenommenen Brillenglases oder Brillenglasrohlings mit Durchlicht durch ein in einem Boden (101, 201, 301, 401) des Transportbehälters (100, 200, 300, 400, 500, 600) befindliches transparentes Fenster
(iv) Beaufschlagen des in der Aufnahme (106, 107; 206, 207; 306, 307; 406, 407) aufgenommenen Brillenglases oder Brillenglasrohlings mit Durchlicht durch ein in einem Boden (101, 201, 301, 401) des Transportbehälters (100, 200, 300, 400, 500, 600) befindliches transparentes Fenster und ein in einem gegenüberliegend angeordneten Deckel des Transportbehälters befindliches transparentes Fenster
(v) Beaufschlagen des in der Aufnahme (106, 107; 206, 207; 306, 307; 406, 407) aufgenommenen Brillenglases oder Brillenglasrohlings mit Durchlicht durch ein in einem Boden (101, 201, 301, 401) des Transportbehälters (100, 200, 300, 400, 500, 600) befindliches transparentes Fenster und eine in einem gegenüberliegend angeordneten Deckel des Transportbehälters (100, 200, 300, 400, 500, 600) befindliche Öffnung
(vi) Beaufschlagen des in der Aufnahme (106, 107; 206, 207; 306, 307; 406, 407) aufgenommenen Brillenglases oder Brillenglasrohlings mit Durchlicht durch eine in einem Boden (101, 201, 301, 401) des Transportbehälters (100, 200, 300, 400, 500, 600) befindliche Öffnung
(vii) Beaufschlagen des in der Aufnahme (106, 107; 206, 207; 306, 307; 406, 407) aufgenommenen Brillenglases oder Brillenglasrohlings mit Durchlicht durch eine in einem Boden (101, 201, 301, 401) des Transportbehälters (100, 200, 300, 400, 500, 600) befindliche Öffnung und eine in einem gegenüberliegend angeordneten Deckel des Transportbehälters (100, 200, 300, 400, 500, 600) befindliche Öffnung
(viii) Beaufschlagen des in der Aufnahme (106, 107; 206, 207; 306, 307; 406, 407) aufgenommenen Brillenglases oder Brillenglasrohlings mit Durchlicht durch eine in einem Boden (101, 201, 301, 401) des Transportbehälters (100, 200, 300, 400, 500, 600) befindliche Öffnung und ein in einem gegenüberliegend angeordneten Deckel des Transportbehälters (100, 200, 300, 400, 500, 600) befindliches transparentes Fenster
(ix) Beaufschlagen des in der Aufnahme (106, 107; 206, 207; 306, 307; 406, 407) aufgenommenen Brillenglases oder Brillenglasrohlings mit Durchlicht durch ein in einer ersten Seitenwand des Transportbehälters (100, 200, 300, 400, 500, 600) befindliches transparentes Fenster und ein in einer gegenüberliegend angeordneten Seitenwand des Transportbehälters (100, 200, 300, 400, 500, 600) befindliches transparentes Fenster
(x) Beaufschlagen des in der Aufnahme (106, 107; 206, 207; 306, 307; 406, 407) aufgenommenen Brillenglases oder Brillenglasrohlings mit Durchlicht durch ein in einer ersten Seitenwand des Transportbehälters (100, 200, 300, 400, 500, 600) befindliches transparentes Fenster und eine in einer gegenüberliegend angeordneten Seitenwand des Transportbehälters (100, 200, 300, 400, 500, 600) befindliche Öffnung
(xi) Beaufschlagen des in der Aufnahme (106, 107; 206, 207; 306, 307; 406, 407) aufgenommenen Brillenglases oder Brillenglasrohlings mit Durchlicht durch eine in einer ersten Seitenwand des Transportbehälters (100, 200, 300, 400, 500, 600) befindliche Öffnung und eine in einer gegenüberliegend angeordneten Seitenwand des Transportbehälters (100, 200, 300, 400, 500, 600) befindliche Öffnung
(xii) Beaufschlagen des in der Aufnahme (106, 107; 206, 207; 306, 307; 406, 407) aufgenommenen Brillenglases oder Brillenglasrohlings mit Licht durch eine Lichtleitereinrichtung, welche Bestandteil des Transportbehälters (100, 200, 300, 400, 500, 600) ist
(xiii) Beleuchten des in der Aufnahme (106, 107; 206, 207; 306, 307; 406, 407) aufgenommenen Brillenglases oder Brillenglasrohlings mit einem Leuchtmittel oder eine Lichtquelle, welches Bestandteil des Transportbehälters (100, 200, 300, 400, 500, 600) ist
(ixx) Beaufschlagen des in der Aufnahme (106, 107; 206, 207; 306, 307; 406, 407) aufgenommenen Brillenglases oder Brillenglasrohlings mit das in der Aufnahme (106, 107; 206, 207; 306, 307; 406, 407) aufgenommene Brillenglas oder den in der Aufnahme aufgenommenen Brillenglasrohling transmittierten und von einem Reflektor des Transportbehälters (100, 200, 300, 400, 500, 600) reflektierten Licht
(xx) Übertragen von Information von einem aktiven drahtlosen Informationsübertragungssystem, welches Bestandteil des Transportbehälters (100, 200, 300, 400, 500, 600) ist
(xxi) Laden einer elektrischen Energieversorgungseinrichtung, welche Bestandteil des Transportbehälters ist über eine Schnittstelle an dem Transportbehälter (100, 200, 300, 400, 500, 600)
(xxii) Fixieren des Brillenglases oder des Brillenglasrohlings in einer Fixierposition mittels einer automatischen Fixiereinrichtung, welche Bestandteil des Transportbehälters (100, 200, 300, 400, 500, 600) ist.

12. Verfahren nach Anspruch 11, **dadurch gekennzeichnet, dass** das Brillenglas oder der Brillenglasrohling mit dem Transportbehälter (100, 200, 300, 400, 500, 600) als Versandpackung versandt wird.

13. Verfahren nach Anspruch 11 oder 12, **dadurch gekennzeichnet, dass** auf das Brillenglas oder den Brillenglasrohling in wenigstens einem der Schritte (i) bis (ixx) ein Muster oder ein Bild projiziert wird.

14. Verfahren nach einem der Ansprüche 11 bis 13, **dadurch gekennzeichnet, dass** in wenigstens einem der Schritte (i) bis (ixx) ein Code von dem Brillenglas oder dem Brillenglasrohling ausgelesen wird.
